# EUROPÄISCHE PATENTSCHRIFT

(11) **EP 2 965 964 B1**
(45) Veröffentlichungstag und Bekanntmachung des Hinweises auf die Patenterteilung: **16.08.2017**
(21) Anmeldenummer: 15001880.2
(22) Anmeldetag: 25.06.2015
(51) Int. Cl.: B60W 30/06, G01S 13/02, G01S 13/93

(54) **VERFAHREN ZUM BETRIEB EINES FAHRERASSISTENZSYSTEMS EINES KRAFTFAHRZEUGS ZUM OPTIMALEN POSITIONIEREN DES KRAFTFAHRZEUGS RELATIV ZU EINER KABELLOSEN LADEEINRICHTUNG UND KRAFTFAHRZEUG**
METHOD FOR OPERATING A DRIVER ASSISTANCE SYSTEM OF A MOTOR VEHICLE FOR OPTIMAL POSITIONING OF THE MOTOR VEHICLE RELATIVE TO A WIRELESS CHARGING DEVICE, AND MOTOR VEHICLE
PROCEDE DE FONCTIONNEMENT D'UN SYSTEME D'ASSISTANCE DU CONDUCTEUR D'UN VEHICULE AUTOMOBILE DESTINE AU POSITIONNEMENT OPTIMAL DU VEHICULE AUTOMOBILE PAR RAPPORT A UN DISPOSITIF DE CHARGEMENT SANS FIL ET VEHICULE AUTOMOBILE

(30) Priorität: 12.07.2014 DE 102014010386
(43) Veröffentlichungstag der Anmeldung: 13.01.2016
(73) Patentinhaber: AUDI AG, 85045 Ingolstadt (DE)
(72) Erfinder: Khlifi, Rachid, DE - 85748 Garching (DE)
(74) Vertreter: Thielmann, Frank

(56) Entgegenhaltungen:
- WO-A2-2014/023595
- DE-A1-102010 063 665

## Beschreibung

Die Erfindung betrifft ein Verfahren zum Betrieb eines Fahrerassistenzsystems eines Kraftfahrzeugs zum optimalen Positionieren des Kraftfahrzeugs relativ zu einer kabellosen Ladeeinrichtung für einen elektrischen Energiespeicher des Kraftfahrzeugs sowie ein Kraftfahrzeug.

In letzter Zeit wurden Kraftfahrzeuge vorgeschlagen, die einen elektrischen Energiespeicher größerer Kapazität aufweisen, der insbesondere auch zur Speisung eines elektrischen Antriebs des Kraftfahrzeugs verwendet wird. Beispiele für derartige Kraftfahrzeuge sind Elektrokraftfahrzeuge und Hybridkraftfahrzeuge. Um die elektrischen Energiespeicher, beispielsweise Batterien, des Kraftfahrzeugs aufladen zu können, wurden inzwischen auch Ladeeinrichtungen vorgeschlagen, bei denen ein drahtloser Ladevorgang möglich ist. Dabei wird üblicherweise induktiv vorgegangen, wobei Energie von einem ersten Ladeelement der Ladeeinrichtung zu einem zweiten Ladeelement des Kraftfahrzeugs drahtlos übertragen wird. Bei den Ladeelementen kann es sich insbesondere um Ladespulen handeln. DE102010063665 A1 beschreibt ein Verfahren zum Betrieb eines Fahrerassistenzsystems eines Kraftfahrzeugs mit einem solchen drahtlosen Ladevorgang nach dem Oberbegriff des Anspruchs 1. Wesentlich für den gewünschten hohen Wirkungsgrad einer solchen drahtlosen Ladeeinrichtung ist die optimale Positionierung des Kraftfahrzeugs relativ zu der Ladeeinrichtung, das heißt, das erste Ladeelement und das zweite Ladeelement müssen optimal zueinander angeordnet sein. Es ist mithin notwendig, eine Möglichkeit aufzufinden, das Kraftfahrzeug relativ zu der Ladeeinrichtung so zu positionieren, dass ein möglichst optimaler Wirkungsgrad erreicht wird, beispielsweise ein einen Schwellwert übersteigender Wirkungsgrad. Nachdem die Ladeeinrichtung oder zumindest das erste Ladeelement ortsfest in einer befahrbaren Oberfläche für das Kraftfahrzeug angeordnet ist, insbesondere also in einer Fahrbahn, ist es zum einen möglich, dass der Fahrer selbst das Kraftfahrzeug, beispielsweise unterstützt durch optische Markierungen, in eine bestimmte Position verbringt, in der ein guter Wirkungsgrad zur Energieübertragung zwischen den Ladeelementen erreicht ist. Dies birgt naturgemäß einige Ungenauigkeiten, so dass Fahrerassistenzsysteme vorgeschlagen wurden, um den Fahrer beim Navigieren relativ zur Ladeeinrichtung bzw. dem ersten Ladeelement zu unterstützen und/oder das Kraftfahrzeug selbst durch Fahreingriffe optimal relativ zur Ladeeinrichtung zu positionieren. Hierzu wurde beispielsweise vorgeschlagen, mittels optischer Sensoren, beispielsweise einer Kamera, charakteristische Strukturen der Ladeeinrichtung und/oder optische Markierungen aufzufinden und zur Grundlage einer Navigation zu machen. Dies ist jedoch dahingehend problematisch, dass bei schlechten Lichtverhältnissen und dergleichen die Detektion und somit die Positionierung stark erschwert ist. Bei einer Fehlplatzierung, beispielsweise nur einer Teilüberlappung der als Ladespulen ausgebildeten Ladeelemente, tritt jedoch eine Verschlechterung des Wirkungsgrads der Energieübertragung, also des Ladevorgangs, auf.

Der Erfindung liegt daher die Aufgabe zugrunde, ein verbessertes, genaueres, insbesondere von der Ausleuchtung im Bereich der Ladeeinrichtung unabhängiges Positionierungsverfahren anzugeben.

Zur Lösung dieser Aufgabe ist bei einem Verfahren der eingangs genannten Art erfindungsgemäß vorgesehen, dass durch Auswerten von Sensordaten wenigstens eines Radarsensors eine Position wenigstens eines insbesondere als Punktquelle reflektierenden Radarmarkers, der in fester geometrischer Beziehung zu der Ladeeinrichtung positioniert ist, und daraus eine relative Position des Kraftfahrzeugs zu der Ladeeinrichtung ermittelt wird, eine zu einer vorbestimmten optimalen Zielposition des Kraftfahrzeugs relativ zu der Ladeeinrichtung führende Trajektorie bestimmt und an einen Fahrer, insbesondere in Form von Fahranweisungen, ausgegeben und/oder durch automatische Fahreingriffe realisiert wird.

Dabei handelt es sich auch vorliegend insbesondere um eine Ladeeinrichtung mit einem ersten Ladeelement, insbesondere einer Ladespule, wobei das Kraftfahrzeug ein zweites Ladeelement, insbesondere eine zweite Ladespule, aufweist, das bezüglich des ersten Ladeelements zur Erreichung eines optimalen, insbesondere eines einen Schwellwert übersteigenden, Wirkungsgrads der Energieübertragung zwischen den Ladeelementen positioniert werden soll. Beispielsweise kann ein Wirkungsgrad von größer 90 % angestrebt werden. Handelt es sich um Ladespulen, soll das erfindungsgemäße Verfahren beispielsweise eine möglichst große Überlappung zwischen den Ladespulen ermöglichen.

Hierzu schlägt das erfindungsgemäße Verfahren vor, ein Radarsystem des Kraftfahrzeugs mit wenigstens einem Radarsensor zu verwenden, um die dreidimensionale Position wenigstens eines Radarmarkers zu bestimmen, der in fester geometrischer Beziehung zu der Ladeeinrichtung bzw. dem ersten Ladeelement positioniert ist. Dies ermöglicht es aber, eine dreidimensionale relative Position des Kraftfahrzeugs zu der Ladeeinrichtung bzw. dem ersten Ladeelement zu ermitteln, so dass die Ermittlung einer Trajektorie möglich ist, die zu einer zum optimalen Laden geeigneten Position führt. Dabei kann die Position des Radarmarkers aus einer Winkel- und einer Abstandsinformation der Sensordaten des Radarsensors ermittelt werden. Bevorzugt weist der Radarsensor eine Antennenanordnung auf, die eine Bestimmung von Winkeln in zwei zueinander senkrechten Ebenen zusätzlich zu dem Abstand des Radarmarkers erlaubt. Besonders bevorzugt wird ein Radarmarker verwendet, von dem eine starke Reflektion auf eine sehr begrenzten Fläche ausgeht, das bedeutet, der Radarmarker kann nach Art einer Punktquelle reflektieren, was die Bestimmung der relativen Position besonders genau ermöglicht, wenn, worauf im Folgenden noch näher eingegangen werden wird, auch der Radarsensor eine hinreichend hohe Genauigkeit in der Messung bietet.

So ist insbesondere ein äußerst genau vermessendes und unabhängig von den Beleuchtungsquellen handelndes Fahrerassistenzsystem zur Positionierung bei einem drahtlosen Ladevorgang gegeben.

In vorteilhafter Ausgestaltung der vorliegenden Erfindung kann vorgesehen sein, dass als Radarmarker ein Winkelreflektor, insbesondere ein triangularer Winkelreflektor, verwendet wird. Winkelreflektoren sind im Stand der Technik grundsätzlich bekannt und werden beispielsweise im Bereich der Schifffahrt eingesetzt. Winkelreflektoren können dabei einen Grundkörper aufweisen, der zwei oder drei in Winkel von exakt 90° zueinander stehende elektrisch leitende Flächen aufweist, wobei Winkelreflektoren Radarwellen hier genau die Richtung reflektieren, aus der die einfallende Radarstrahlung kommt, ohne dass sie senkrecht zu der Einfallsrichtung ausgerichtet sein müssen. Dabei wird bevorzugt ein triangularer Winkelreflektor verwendet, also ein Winkelreflektor, der drei reflektierende Flächen im Winkel von 90° zueinander aufweist.

Um die Bestimmung der relativen Position weiter zu verbessern, kann vorgesehen sein, dass mehr als ein Radarmarker und/oder wenigstens zwei Radarsensoren verwendet werden, die insbesondere das gesamte Umfeld des Kraftfahrzeugs abdecken. Beispielsweise können am Kraftfahrzeug acht Radarsensoren vorgesehen werden, die das gesamte Umfeld abtasten. Für die Zwecke der vorliegenden Erfindung kann es jedoch ausreichend sein, bestimmte Bereiche des Umfelds durch die Radarsensoren abzudecken, nachdem sich die Ladeeinrichtungen üblicherweise nahe einer Wand befinden, so dass sie auf bestimmte Art und Weise durch das Kraftfahrzeug angesteuert werden. Werden mehrere Radarsensoren mit überlappenden Fassungsbereichen verwendet, können die Positionen des Radarmarkers zu einer genaueren Position zusammengefasst werden.

Doch auch die Nutzung mehrerer Radarreflektoren ist bezüglich der Genauigkeit der Bestimmung der relativen Position des Kraftfahrzeugs und der Ladeeinrichtung (bzw. des ersten Ladeelements) zweckmäßig, da dann Positionen mehrerer Radarmarker, deren geometrische Beziehung zur Ladeeinrichtung bekannt ist, bestimmt werden.

Eine besonders vorteilhafte Ausgestaltung bei Verwendung mehrerer Radarmarker sieht vor, dass in ihrer Reflektionscharakteristik und somit in den Sensordaten unterscheidbare Radarmarker verwendet werden. Das bedeutet, bereits in den Messungen des wenigstens einen Radarsensors kann festgestellt werden, welche Radarmarker nun detektiert wurden, so dass die Zuordnung deutlich vereinfacht wird. Beispielsweise kann ein Radarmarker eine stärkere Reflektion als ein anderer Radarmarker liefern oder dergleichen. Derartige unterscheidbare Reflektionscharakteristiken können auch als Hartkodierung verstanden werden.

Die vorliegende Erfindung nutzt besonders bevorzugt die Tatsache aus, dass inzwischen Radarsensoren bekannt wurden, die eine äußerst hohe Auflösung und Messgenauigkeit bieten, insbesondere auch bezüglich der Objekttrennung und dergleichen. Eine verbesserte Unterscheidbarkeit von Objekten ist insbesondere gegeben, wenn ein Radarsensor mit einer Frequenzbandbreite von mehr als 3 GHz verwendet wird. Je größer die Frequenzbandbreite ist, desto leichter können einzelne reflektierende Objekte voneinander unterschieden werden (Winkel- und Abstandstrennfähigkeit). Beispielsweise kann ein Radarsensor verwendet werden, der in einem Frequenzband von 77 bis 81 GHz bei einer Frequenzbandbreite von 4 GHz betrieben wird. Als besonders geeignet für die Verwendung solcher Bandbreiten und als ein hohes Signal-zu-Rausch-Verhältnis aufweisend haben sich auf Halbleitertechnologie basierende Radarsensoren erwiesen, die kürzlich in realisierbarer Form, insbesondere in der CMOS-Technologie, möglich wurden.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin sieht eine besonders vorteilhafte Ausgestaltung der vorliegenden Erfindung vor, dass ein Radarsensor mit einem Halbleiterchip, insbesondere einem CMOS-Chip verwendet wird, durch den der Radar-Transceiver realisiert ist. Wie bereits erwähnt wurde, bieten derartige Halbleiterchips, insbesondere CMOS-Chips, insbesondere auch die Möglichkeit, Betriebsparameter zu erreichen, die dem erfindungsgemäßen Verfahren besonders zuträglich sind, beispielsweise die bereits genannte hohe Frequenzbandbreite, jedoch auch ansonsten ein insbesondere sehr gutes Signal-zu-Rausch-Verhältnis und eine sehr hohe Genauigkeit auch auf kürzeren Distanzen, beispielsweise im Bereich von 25 cm bis 30 m. So kann beispielsweise vorgesehen sein, dass die Radarsensoren eine Reichweite von 25 m aufweisen, die für die hier beschriebene Anwendung ausreichend ist. Besonders bevorzugt ist es, wenn durch den Halbleiterchip ferner eine digitale Signalverarbeitungskomponente und/oder eine Steuereinheit des Radarsensors realisiert sind und/oder eine Antennenanordnung des Radarsensors und der Halbleiterchip als Package realisiert sind. So ergibt sich ein äußerst kleinbauender Radarchip, was es insbesondere ermöglicht, auch speziell für das erfindungsgemäße Verfahren vorgesehene Radarchips an Kraftfahrzeugen zu verbauen, wobei es jedoch bevorzugt ist, wenn die Sensordaten des Radarsensors auch weitergehend für andere Fahrzeugsysteme, insbesondere Fahrerassistenzsysteme, eingesetzt werden können. Durch die Hochintegration mehrerer Komponenten werden Rauscheffekte weiter reduziert, was auch für Signallaufstrecken gilt, so dass es insbesondere auch bei höheren Frequenzbandbreiten möglich ist, kleine Zykluszeiten, beispielsweise kleiner als 30 ms, zu ermöglichen.

Die Nutzung von hoch auflösenden, äußerst genau messenden Radarsensoren ermöglicht es insbesondere auch, wenn mehrere Radarmarker verwendet werden, diese nahe beieinander anzuordnen, da die verschiedenen Objekte/Ziele hinreichend gut voneinander getrennt werden können. Dies erweist sich hinsichtlich der praktischen Realisierung der Radarmarker als vorteilhaft, da dann insbesondere nur an einer Stelle eine Modifikation der Fahrbahn stattfinden muss.

Es sei an dieser Stelle noch angemerkt, dass sich neben den bevorzugten Winkelreflektoren auch andere Radarmarker selbstverständlich realisieren lassen, bevorzugt solche, die einer Radaroptik entsprechen bzw. eine Radaroptik realisieren, die einen möglichst fokussierten Strahl auf einer möglichst kleinen Fläche zur Realisierung einer Punktquelle zurückwerfen. Alternative Möglichkeiten, Punktquellen zu realisieren, sind beispielsweise durch Kugelformen gegeben, die allerdings kein besonders starkes Radarsignal zurückliefern.

Neben dem Verfahren betrifft die Erfindung auch ein Kraftfahrzeug, aufweisend wenigstens einen Radarsensor und ein Fahrerassistenzsystem zum optimalen Positionieren des Kraftfahrzeugs relativ zu einer kabellosen Ladeeinrichtung für einen elektrischen Energiespeicher des Kraftfahrzeugs mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug in einer Fahrsituation bezüglich einer drahtlosen Ladeeinrichtung,
- Fig. 2: eine mögliche Ausführungsform eines Radarmarkers, und
- Fig. 3: den Aufbau eines verwendeten Radarsensors.

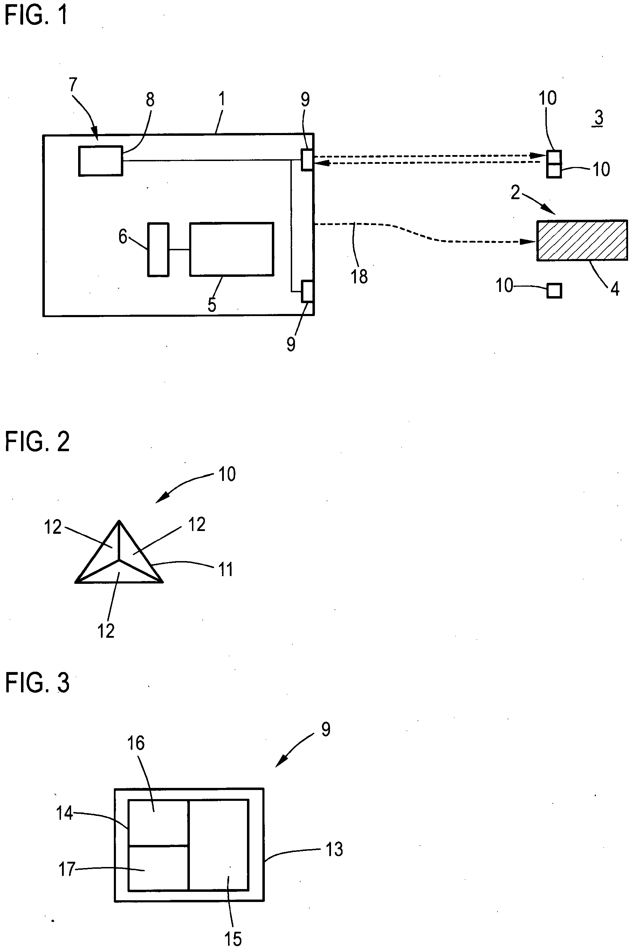

Fig. 1 zeigt eine Betriebssituation eines erfindungsgemäßen Kraftfahrzeugs 1, welches hinsichtlich einer ortsfesten, drahtlosen Ladeeinrichtung 2, konkret einem in der Fahrbahn 3 eingelassenen Ladeelement 4, derart positioniert werden soll, dass ein zweites Ladeelement 5 des Kraftfahrzeugs 1 mit möglichst hohem Wirkungsgrad Energie von dem ersten Ladeelement 4 empfangen kann. Auf diese Weise kann ein elektrischer Energiespeicher 6 des Kraftfahrzeugs 1 aufgeladen werden. Bei den Ladeelementen 4, 5 handelt es sich vorliegend um Ladespulen.

Um das zweite Ladeelement 5 ideal bezüglich des ersten Ladeelements 4 zu positionieren, insbesondere mit einer zur Erreichung eines gewünschten Minimalwirkungsgrades notwendigen Überdeckung, ist im Kraftfahrzeug 1 ein Fahrzeugsystem 7 mit einem Steuergerät 8 vorgesehen, das zur Durchführung des erfindungsgemäßen Verfahrens ausgebildet ist. Das bedeutet, das Fahrerassistenzsystem 7 ist zur Positionierung des Kraftfahrzeugs 1 relativ zu der kabellosen Ladeeinrichtung 2 ausgebildet und nutzt dazu Sensordaten von Radarsensoren 9, die vorliegend im vorderen Bereich des Kraftfahrzeugs verbaut sind. Über die Radarsensoren 9 ist es möglich, die Positionen von Radarmarkern 10 zu bestimmen, die in fester, bekannter Ortsbeziehung zu dem ersten Ladeelement 4 in die Fahrbahn 3 eingelassen sind. Die Radarmarker stellen also zusätzliche Elemente dar, die es ermöglichen, mit hoher Genauigkeit Positionen zu bestimmen, die es ermöglichen, eine relative Position des Kraftfahrzeugs 1 zu dem ersten Ladeelement 4 zu ermitteln, was durch das Steuergerät 8 auch geschieht. Die hervorragende Ortsauflösung wird dabei auch durch die Ausgestaltung der Radarsensoren 9 erreicht, welche eine Antennenanordnung aufweisen, die ein Messen von Winkeln in zwei zueinander senkrechten Ebenen und somit der dreidimensionalen Position der Radarmarker 10 erlauben, wenn auch der Abstand, der gemessen wird, mit betrachtet wird. Um die Trennfähigkeit zwischen unterschiedlichen Objekten zu erhöhen, ist eine hohe Frequenzbandbreite von hier 4 GHz gegeben, was es im Übrigen auch ermöglicht, die in Fig. 1 oberhalb des ersten Ladeelements 4 gezeigten Radarmarker 10 nah beieinander zu platzieren, insbesondere als eine einzige Baueinheit. Weitere Genauigkeitsverbesserungen ergeben sich dadurch, was im Folgenden noch näher erläutert werden wird, dass das gesamte Radar-Frontend als Package mit der Antennenanordnung und einem Halbleiterchip realisiert ist.

Die Radarmarker 10 unterscheiden sich in ihrer Reflektionscharakteristik, beispielsweise in der Reflektionsstärke, so dass sie hartkodiert und somit bereits leicht in den Sensordaten der Radarsensoren 9 unterscheidbar sind.

Fig. 2 zeigt einen solchen Radarmarker 10 näher, der vorliegend als ein triangularer Winkelreflektor 11 realisiert ist. Dieser weist, wie grundsätzlich bekannt, drei jeweils im 90°-Winkel zueinander stehende Reflektionsflächen 12 auf. Über den Winkelreflektor 11 können einfallende Radarsignale genau in die Richtung reflektiert werden, aus der sie eingefallen sind. Nachdem zudem der Radarmarker 10 klein gehalten ist, reflektiert er letztlich wie eine Punktquelle, was ebenso der Genauigkeit der Positionsbestimmung zuträglich ist.

Fig. 3 zeigt eine mögliche Ausgestaltung der Radarsensoren 9, die vorliegend als ein Package 13 realisiert sind, welches neben der hier der Übersichtlichkeit halber nicht näher gezeigten Antennenanordnung einen Halbleiterchip 14, hier einen CMOS-Chip, umfasst. Durch den CMOS-Chip sind ein Radar-Transceiver 15, eine digitale Signalverarbeitungskomponente 16 (DSP) und eine Steuereinheit 17 realisiert. Durch diese hochintegrierte Lösung lassen sich hohe Zykluszeiten und hohe Signal-zu-Rausch-Verhältnisse erreichen.

Ist aufgrund der Sensordaten der Radarsensoren 9 die Position der Radarmarker 10 bestimmt, lässt sich hieraus, wie dargelegt wurde, die relative Position des Kraftfahrzeugs 1 zu der Ladeeinrichtung 2, konkret des ersten Ladeelements 4 zum zweiten Ladeelement 5, bestimmen. Dies wiederum ermöglicht es, eine Trajektorie 18 zu ermitteln, die, durch das Kraftfahrzeug 1 zurückgelegt, die optimale Positionierung der Ladeelemente 4, 5 zueinander herstellt. Diese Trajektorie 18 kann durch Fahreingriffe, die das Steuergerät 8 anfordert, unmittelbar realisiert werden, und/oder sie kann als Fahranweisung an den Fahrer ausgegeben werden.

## Patentansprüche

1. Verfahren zum Betrieb eines Fahrerassistenzsystems (7) eines Kraftfahrzeugs (1) zum optimalen Positionieren des Kraftfahrzeugs (1) relativ zu einer kabellosen Ladeeinrichtung (2) für einen elektrischen Energiespeicher (6) des Kraftfahrzeugs (1),
**dadurch gekennzeichnet,**
**dass** durch Auswerten von Sensordaten wenigstens eines Radarsensors (9) eine Position wenigstens eines als Punktquelle reflektierenden Radarmarkers (10), der in fester geometrischer Beziehung zu der Ladeeinrichtung (2) positioniert ist, und daraus eine relative Position des Kraftfahrzeugs (1) zu der Ladeeinrichtung (2) ermittelt wird, eine zu einer vorbestimmten optimalen Zielposition des Kraftfahrzeugs (1) relativ zu der Ladeeinrichtung (2) führende Trajektorie (18) bestimmt und an einen Fahrer, insbesondere in Form von Fahranweisungen, ausgegeben und/oder durch automatische Fahreingriffe realisiert wird.

2. Verfahren nach Anspruch 1,
**dadurch gekennzeichnet,**
**dass** als Radarmarker (10) ein Winkelreflektor (11), insbesondere ein triangularer Winkelreflektor (11), verwendet wird.

3. Verfahren nach Anspruch 1 oder 2,
**dadurch gekennzeichnet,**
**dass** mehr als ein Radarmarker (10) und/oder wenigstens zwei Radarsensoren (9) verwendet werden, die insbesondere das gesamte Umfeld des Kraftfahrzeugs (1) abdecken.

4. Verfahren nach Anspruch 3,
**dadurch gekennzeichnet,**
**dass** in ihrer Reflektionscharakteristik und somit in den Sensordaten unterscheidbare Radarmarker (10) verwendet werden.

5. Verfahren nach einem der vorangehenden Ansprüche,
**dadurch gekennzeichnet,**
**dass** der Radarsensor (9) mit einer Frequenzbandbreite von mehr als 3 GHz verwendet wird.

6. Verfahren nach einem der vorangehenden Ansprüche,
**dadurch gekennzeichnet,**
**dass** ein Radarsensor (9) mit einem Halbleiterchip (14), insbesondere einem CMOS-Chip, verwendet wird, durch den der Radar-Transceiver (15) realisiert ist.

7. Verfahren nach Anspruch 6,
**dadurch gekennzeichnet,**
**dass** durch den Halbleiterchip (14) ferner eine digitale Signalverarbeitungskomponente (16) und/oder eine Steuereinheit (17) des Radarsensors (9) realisiert sind und/oder eine Antennenanordnung des Radarsensors (9) und der Halbleiterchip (14) als ein Package (13) realisiert sind.

8. Kraftfahrzeug (1), aufweisend wenigstens einen Radarsensor (9) und ein Fahrerassistenzsystem (7) zum optimalen Positionieren des Kraftfahrzeugs (1) relativ zu einer kabellosen Ladeeinrichtung (2) für einen elektrischen Energiespeicher (6) des Kraftfahrzeugs (1) mit einem zur Durchführung eines Verfahrens nach einem der vorangehenden Ansprüche ausgebildeten Steuergerät (8).

## Claims

1. Method for operating a driver assistance system (7) of a motor vehicle (1) for optimal positioning of the motor vehicle (1) relative to a wireless charging device (2) for an electrical energy storage system (6) of the motor vehicle (1),
**characterised in that**
through the analysis of sensor data of at least one radar sensor (9), a position of at least one radar marker (10) reflecting as a point source which is positioned in a fixed geometric relationship with the charging device (2) and from which a position of the motor vehicle (1) relative to the charging device (2) is determined, determines a predetermined optimal target position of the motor vehicle (1) relative to the trajectory (18) guiding the charging device (2) and is output to a driver, in particular in the form of driving instructions and/or realised by automatic driving operations.

2. Method according to claim 1
**characterised in that**
a corner reflector (11), in particular a triangular corner reflector (11), is used as a radar marker (10).

3. Method according to claim 1 or 2,
**characterised in that**
more than one radar marker (10) and/or at least two radar sensors (9) are used, which in particular cover the entire surrounding area of the motor vehicle (1).

4. Method according to claim 3,
**characterised in that**
radar markers (10) with distinguishable reflection characteristics and thus distinguishable sensor data are used.

5. Method according to any one of the preceding claims,
**characterised in that**
the radar sensor (9) is used with a frequency bandwidth of over 3 GHz.

6. Method according to any one of the preceding claims,
**characterised in that**
a radar sensor (9) with a semiconductor chip (14), in particular a CMOS chip, is used, by which the radar-transceiver (15) is realised.

7. Method according to claim 6,
**characterised in that**
the semiconductor chip (14) also realises a digital signal processing component (16) and/or a control unit (17) of the radar sensor (9), and/or **in that** an antenna arrangement of the radar sensor (9) and of the semiconductor chip (14) are realised as one package (13).

8. Motor vehicle (1), comprising at least one radar sensor (9) and one driver assistance system (7) for optimal positioning of the motor vehicle (1) relative to a wireless charging device (2) for an electrical energy storage system (6) of the motor vehicle (1), with a control device (8) designed to carry out a method according to any one of the preceding claims.

## Revendications

1. Procédé pour faire fonctionner un système d'assistance au conducteur (7) d'un véhicule automobile (1) afin de placer de manière optimale le véhicule automobile (1) par rapport à un dispositif de recharge sans fil (2) pour un accumulateur d'énergie électrique (6) du véhicule automobile (1),
**caractérisé en ce que**, en évaluant des données de capteur d'au moins un capteur radar (9), on détermine une position d'au moins un repère de radar (10) réfléchissant en tant que point source et placé dans une relation géométrique fixe par rapport au dispositif de recharge (2) et à partir de là une position relative du véhicule automobile (1) par rapport au dispositif de recharge (2), on détermine une trajectoire (18) menant à une position cible optimale prescrite du véhicule automobile (1) par rapport au dispositif de recharge (2) et on la fournit à un conducteur, en particulier sous la forme d'instructions de conduite, et/ou on réalise des actions de conduite automatiques.

2. Procédé selon la revendication 1, **caractérisé en ce qu'**on utilise en tant que repère de radar (10) un réflecteur à intersection (11), en particulier un réflecteur à intersection (11) triangulaire.

3. Procédé selon la revendication 1 ou 2, **caractérisé en ce qu'**on utilise plus d'un repère de radar (10) et/ou au moins deux capteurs radars (9) qui couvrent en particulier tout l'environnement du véhicule automobile (1).

4. Procédé selon la revendication 3, **caractérisé en ce qu'**on utilise des repères de radar (10) qui peuvent être différents quant à leur caractéristique de réflexion et donc quant à leurs données de capteur.

5. Procédé selon l'une des revendications précédentes, **caractérisé en ce qu'**on utilise le capteur radar (9) avec une largeur de bande de fréquence de plus de 3 GHz.

6. Procédé selon l'une des revendications précédentes, **caractérisé en ce qu'**on utilise un capteur radar (9) avec une puce à semi-conducteurs (14), en particulier une puce CMOS, par laquelle est réalisé le récepteur-émetteur radar (15).

7. Procédé selon la revendication 6, **caractérisé en ce qu'**un composant de traitement numérique de signaux (16) et/ou une unité de commande (17) du capteur radar (9) sont en outre réalisés par la puce à semi-conducteurs (14) et/ou un dispositif d'antenne du capteur radar (9) et la puce à semi-conducteurs (14) sont réalisés comme un bloc (13).

8. Véhicule automobile (1), comportant au moins un capteur radar (9) et un système d'assistance au conducteur (7) afin de placer de manière optimale le véhicule automobile (1) par rapport à un dispositif de recharge sans fil (2) pour un accumulateur d'énergie électrique (6) du véhicule automobile (1) avec un appareil de commande (8) conçu pour mettre en oeuvre un procédé selon l'une des revendications précédentes.
